# EUROPÄISCHE PATENTSCHRIFT

(11) **EP 4 232 339 B1**
(45) Veröffentlichungstag und Bekanntmachung des Hinweises auf die Patenterteilung: **19.11.2025**
(21) Anmeldenummer: 21835999.0
(22) Anmeldetag: 03.12.2021
(51) Int. Cl.: B61D 17/04

(54) **VERFAHREN ZUR MODULAREN HERSTELLUNG EINES WAGENKASTEN-ROHBAUS EINES SCHIENENFAHRZEUGS UND WAGENKASTEN-ROHBAU**
PROCESS FOR THE MODULAR MANUFACTURING OF ROUGH BODYWORK OF A RAIL VEHICLE, AND ROUGH BODYWORK
PROCÉDÉ DE FABRICATION MODULAIRE DE CARROSSERIE BRUTE D'UN VÉHICULE FERROVIAIRE ET CARROSSERIE BRUTE

(30) Priorität: 21.12.2020 DE 102020216382
(43) Veröffentlichungstag der Anmeldung: 30.08.2023
(73) Patentinhaber: Siemens Mobility GmbH, 80997 München (DE)
(72) Erfinder: BISSELS, Stephan, 47638 Straelen (DE); CUYLEN, Jens, 42113 Wuppertal (DE); GÜNTHER, René, 47239 Duisburg (DE); OSTERLOH, Bodo, 47802 Krefeld (DE); TRAPP, Alexander, 46514 Schermbeck (DE)
(74) Vertreter: Siemens Patent Attorneys
(86) Internationale Anmeldenummer: PCT/EP2021/084147
(87) Internationale Veröffentlichungsnummer: WO 2022/135880

(56) Entgegenhaltungen:
- EP-A1- 0 369 134
- EP-A1- 1 223 094
- WO-A1-2014/044536
- WO-A1-2016/120027
- DE-A1- 102011 088 509
- DE-A1- 102017 102 552

## Beschreibung

Die Erfindung bezieht sich auf ein Verfahren zur modularen Herstellung eines Wagenkasten-Rohbaus eines Schienenfahrzeugs. Ein solches Verfahren ist beispielsweise aus der EP 1 958 844 A1 bekannt, die sich auf ein Verfahren zur Herstellung einer Baugruppe eines Zuges für die Personenbeförderung bezieht, d. h. Schienenfahrzeuge aller dafür geeigneter Art, wie Hochgeschwindigkeitszüge, Regionalzüge, Straßenbahnen und Metros. Bei einem nach diesem Verfahren hergestellten Wagenkasten-Rohbau sind beispielsweise ein Kopfmodul, zwei jeweils mit Fahrwerken ausgestattete Trägermodule und ein Zwischenmodul vorgesehen, das als Personenabteil ausgeführt ist. Die einzelnen Module des Wagenkasten-Rohbaus sind durch Fügen miteinander verbunden Aus der EP 0369 134 A1 ist ein Verfahren bekannt, bei welchem Dach und Seitenwände als Großbaugruppen durch Klebeverfahren untereinander gefügt werden.

Allgemein können die Baugruppen Untergestell, Seitenwand, Dach, Stirnwand und Kopf eines Schienenfahrzeugs als "Großbaugruppen" bezeichnet werden. Sie bilden den Wagenkasten-Rohbau des Schienenfahrzeugs aus, der die vollständige, tragende Wagenstruktur bildet. Diese übernimmt die erforderliche Tragfunktion für sich selbst, etwaige Nutzlast und sämtliche am Wagenkasten-Rohbau montierten Komponenten.

Es ist im Stand der Technik bekannt, die Schnittstellen unmittelbar aneinander angrenzender Großbaugruppen als Schweißverbindungen auszuführen. Somit sind die Großbaugruppen und der daraus aufgebaute Wagenkasten-Rohbau überwiegend geschweißte Stahl- oder Aluminiumstrukturen, welche in Integral- oder Differentialbauweise hergestellt sind.

Bei der Integralbauweise werden weitestgehend großformatige Strangpressprofile verwendet, in denen geeignete Befestigungsmöglichkeiten für Schnittstellen und Ausrüstungsgegenstände integriert sind. Bei der Differentialbauweise wird zunächst ein tragendes Stahl- oder Aluminiumskelett erstellt, auf das anschließend Bleche zur Beplankung angebracht werden. Befestigungsmöglichkeiten für Schnittstellen und Ausrüstungsgegenstände sind an der Tragstruktur vorgesehen.

Das Fügen durch Schweißen ist eines der wichtigsten und am weitesten verbreiteten Fügeverfahren im Schienenfahrzeugbau. Dieses Fügeverfahren ist jedoch zeit- und kostenintensiv, was erforderliche Richt- und Nachbearbeitungsprozesse anbetrifft, die insbesondere aufgrund der thermischen Spannungen und Verformungen beim Schweißen der traditionellen Rohbauherstellung erforderlich sind. Zudem gestattet es das Fügeverfahren "Schweißen" nicht, unterschiedliche Werkstoffe für die verschiedenen Großbaugruppen zu verwenden.

Ausgehend hiervon liegt der Erfindung die Aufgabe zugrunde, ein Verfahren zur modularen Herstellung eines Wagenkasten-Rohbaus eines Schienenfahrzeugs sowie einen Wagenkasten-Rohbau anzugeben, bei dem auf Richt- und Nachbearbeitungsprozesse weitgehend verzichtet werden kann.

Diese Aufgabe wird gelöst durch ein Verfahren mit den in Anspruch 1 aufgeführten Schritten.

Es ist hervorzuheben, dass die einzelnen, mittels strukturellem Kleben zu fügenden Großbaugruppen, wie das Untergestell, eine Seitenwand, das Dach, die Stirnwand und der Kopf, je nach Auslegung des Wagenkasten-Rohbaus in Differential- oder Integralbauweise hergestellt sein können, wenn die betreffende Großbaugruppe aus Metall zu fertigen ist. Ebenso ist es möglich, dass bestimmte Großbaugruppen, wie beispielsweise der Kopf, aus faserverstärktem Kunststoff hergestellt sind. Wesentlich ist, dass, unabhängig vom jeweils für die einzelne Großbaukomponente eingesetzten Fertigungsverfahren oder Material, sämtliche Großbaugruppen am Ende der Fertigung des Wagenkasten-Rohbaus durch strukturelles Kleben miteinander gefügt werden. Dabei ist der gesamte Wagenkasten-Rohbau aus Großbaugruppen zusammengesetzt, die jeweils untereinander mittels strukturellem Kleben miteinander verbunden sind. Grundsätzlich sind für alle Großkomponenten, unabhängig voneinander, sämtliche Bauweisen möglich, z. B. Differential- und Integralbauweise oder Fertigung aus FKV.

Beim Fügen von zwei Großbaugruppen, die in Integralbauweise (Aluminium-Strangpressprofile) hergestellt worden sind, ist es bevorzugt, dass einander zugewandte Randabschnitte von miteinander zu fügenden Großbaugruppen aus Hohlkammerprofilen gebildet werden. Dabei weisen die einander zugewandten Seiten der Hohlkammerprofile eine Einfädeleinrichtung zum Vorpositionieren der Hohlkammerprofile zueinander auf und einer Außenseite des Wagenkasten-Rohbaus zugeordnete Seiten der Hohlkammerprofile werden mittels eines mit den Hohlkammerprofilen jeweils überlappenden Blech- oder Profilstreifens verbunden, dessen den Hohlkammerprofilen zugewandte Randabschnitte jeweils mit den Hohlkammerprofilen strukturell verklebt werden.

Zum Bereitstellen einer bündigen Außenhaut des Wagenkasten-Rohbaus ist es bevorzugt, dass die einander zugewandten Randabschnitte der Hohlkammerprofile jeweils an ihren einer Außenseite des Wagenkasten-Rohbaus zugeordneten Seiten einen Absatz aufweisen, in dessen Bereich der Blech- und Profilstreifen strukturell mit dem jeweiligen Hohlkammerprofil verklebt wird, wobei die Höhe des Absatzes der Höhenerstreckung des Blech- oder Profilstreifens und der strukturellen Klebeschicht entspricht. Bei dieser Ausführungsform liegen die Außenseiten der beiden Hohlkammerprofile und des Blech- oder Profilstreifens in einer gemeinsamen Ebene.

Die Einfädeleinrichtung kann beispielsweise von einer Nut-/Federeinrichtung gebildet werden, die auf einer einer Innenseite des Wagenkasten-Rohbaus zugeordneten Seite der Hohlkammerprofile angeordnet wird. Insofern ist eine Innenseite der Hohlkammerprofile durch die Einfädeleinrichtung geschlossen und lediglich eine Zugänglichkeit des Übergangsbereichs zwischen den Hohlkammerprofilen von der Außenseite gegeben. Bei dieser Ausführungsform ist bevorzugt vorgesehen, dass in Schritt b) ein Zwischenprofil zwischen die Einfädeleinrichtung und den Blech- oder Profilstreifen gelegt wird und dieses Zwischenprofil auf der einer Innenseite des Wagenkasten-Rohbaus zugeordneten Seite der Hohlkammerprofile jeweils mit den Hohlkammerprofilen sowie auf der einer Außenseite des Wagenkasten-Rohbaus zugeordneten Seite der Hohlkammerprofile mit dem Blech- oder Profilstreifen strukturell verklebt wird.

Dabei kann das Zwischenprofil im Querschnitt eine Rechteck- oder Trapezform aufweisen. Sofern eine Trapezform für das Zwischenprofil vorgesehen ist, ist die längere der zueinander parallelen Seiten der Trapezform der Einfädelhilfe zugewandt.

Alternativ kann die Einfädelhilfe von einem Schiebesitz gebildet werden, wobei das eine Hohlkammerprofil in Richtung auf das andere Hohlkammerprofil vorstehende Stege aufweist, die beim Zusammenführen der Hohlkammerprofile in das andere Hohlkammerprofil eingreifen. Auch die Ausbildung der Einfädeleinrichtung als Schiebsitz gestattet eine Vorpositionierung der Hohlkammerprofile zueinander. Bei dieser Ausführungsform ist es vorteilhaft, wenn die einander zugewandten Randabschnitte der Hohlkammerprofile jeweils an ihren einer Innenseite des Wagenkasten-Rohbaus zugeordneten Seite jeweils mit einem weiteren Blech- oder Profilstreifen strukturell verklebt werden.

Die o.g. Aufgabe wird hinsichtlich eines Wagenkasten-Rohbaus eines Schienenfahrzeugs gelöst durch einen Wagenkasten-Rohbau nach Anspruch 8. Bevorzugte Ausführungsformen dieses Wagenkasten-Rohbaus ergeben sich aus den Ansprüchen 10 bis 14 und sind bereits anhand der vorstehenden Beschreibung eines Verfahrens zur modularen Herstellung eines Wagenkasten-Rohbaus erläutert worden.

Ein Ausführungsbeispiel der Erfindung wird nachfolgend unter Bezugnahme auf die Zeichnungen noch näher erläutert. Es zeigen:
- Figur 1: eine schematische Darstellung eines Ablaufs für ein Verfahren zur modularen Herstellung eines Wagenkasten-Rohbaus eines Schienenfahrzeugs,
- Figur 2: eine Querschnittsdarstellung eines Fügebereichs zwischen zwei Hohlkammerprofilen in einer ersten Ausführungsform und
- Figur 3: eine Querschnittsdarstellung eines Fügebereichs zwischen zwei Hohlkammerprofilen in einer zweiten Ausführungsform.

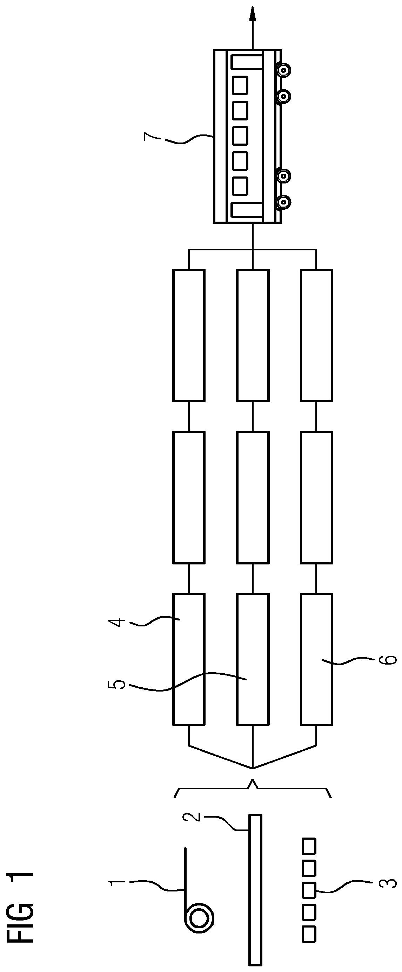

Figur 1 veranschaulicht einen Verfahrensablauf zur modularen Herstellung eines Wagenkasten-Rohbaus eines Schienenfahrzeugs. Links in Figur 1 sind beispielhaft Ausgangsmaterialien/-komponenten dargestellt, nämlich ein Aluminium-Coil **1,** ein Hohlkammerprofil 2 und eine Anzahl Fenster **3.** Daraus können diverse Großbaugruppen eines Schienenfahrzeugs in Integralbauweise gefertigt werden. Der mittlere Teil von Figur 1 zeigt die in einem Schritt a) des Herstellungsverfahrens stattfindende parallele Fertigung der verschiedenen Großbaugruppen, wobei beispielsweise Großbaugruppe 4 eine Seitenwand, Großbaugruppe 5 ein Dach und Großbaugruppe 6 ein Untergestell eines Wagenkasten-Rohbaus eines Schienenfahrzeugs sein kann.

In im dargestellten Ausführungsbeispiel drei beispielhaften Fertigungsschritten werden die jeweiligen Großbaugruppen hergestellt. In einem letzten Fertigungsschritt b) des modularen Herstellungsverfahrens für einen Wagenkasten-Rohbau werden die zuvor parallel zueinander gefertigten Großbaugruppen mittels strukturellem Kleben zu dem Wagenkasten-Rohbau zusammengefügt. Für das strukturelle Kleben sollen bevorzugt kaltaushärtende Zweikomponenten-Konstruktionsklebstoffe auf Basis von Epoxidharz oder Polyurethan verwendet werden. Die Großbaugruppen 4, 5, 6 werden somit Teil des Wagenkasten-Rohbaus 7, der insgesamt aus strukturell miteinander verklebten Großbaugruppen zusammengesetzt ist. Der Wagenkasten-Rohbau 7 kann beispielsweise auch einen Kopf aus faserverstärktem Kunststoff aufweise, der mittels strukturellem Kleben mit den angrenzenden, beispielsweise in Aluminium-Integralbauweise gefertigten Großbaugruppen "Dach", "Seitenwand" und "Boden" gefügt wird.

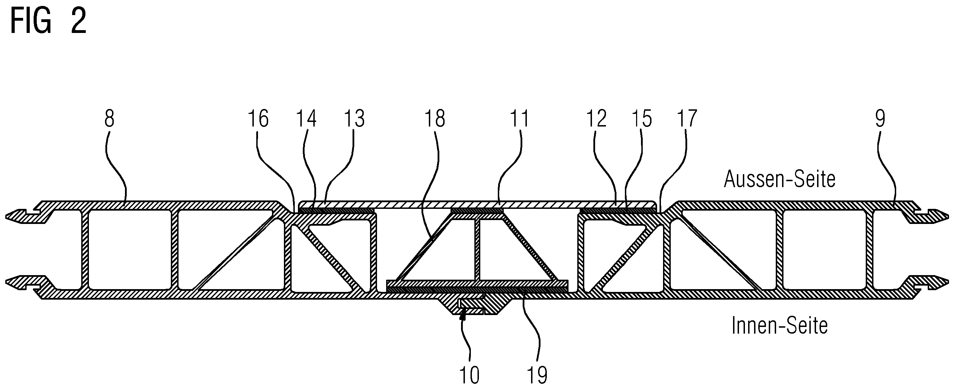

Figur 2 zeigt ein erstes Ausführungsbeispiel für einen Fügebereich zwischen zwei Hohlkammerprofilen 8, 9, welche jeweils Randprofile von Großbaugruppen bilden, die mittels strukturellem Kleben miteinander zu fügen sind. Auf einer Innenseite des Wagenkasten-Rohbaus 7 bilden die Hohlkammerprofile 8, 9 eine Einfädeleinrichtung aus, die als Nut-/Federeinrichtung 10 ausgeführt ist und zur Vorpositionierung der Hohlkammerprofile 8, 9 für einen nachfolgenden Klebevorgang dient. Auf der Außenseite des Wagenkasten-Rohbaus 7 ist ein Blech- oder Profilstreifen 11 vorgesehen, dessen den Hohlkammerprofilen 8, 9 zugewandte Randabschnitte 12, 13 mittels einer jeweiligen Klebeschicht 14, 15 mit den Hohlkammerprofilen 8, 9 strukturell verklebt sind. Zum Gewährleisten einer bündigen Außenhaut des Wagenkasten-Rohbaus 7 im Fügebereich weisen die einander zugewandten Randabschnitte der Hohlkammerprofile 8, 9 jeweils an ihren einer Außenseite des Wagenkasten-Rohbaus zugeordneten Seiten einen Absatz 16, 17 auf. Dabei entspricht die Höhe der Absätze 16, 17 einer Gesamthöhe des Blech- oder Profilstreifens 11 und der jeweiligen Klebeschichte 14 bzw. 15.

Zum Gewährleisten einer ausreichenden Festigkeit der Klebeverbindung zwischen den beiden Hohlkammerprofilen 8, 9 ist ein zwischen der Nut-/Federeinrichtung 10 und dem Blech- oder Profilstreifen 11 angeordnetes Zwischenprofil 18 vorgesehen, welches im vorliegenden Ausführungsbeispiel eine Trapezform aufweist. Dabei ist die längere der zueinander parallelen Seiten des Trapezes mittels einer Klebeschicht 19 im Bereich der Einfädeleinrichtung 10 jeweils mit den Hohlkammerprofilen 8, 9 strukturell verklebt. Die kürzere der beiden zueinander parallelen Seiten des Trapezes ist mit dem Blech- oder Profilstreifen 11 ebenfalls strukturell verklebt. Das Zwischenprofil 18 ist zentral zwischen den beiden Hohlkammerprofilen 8, 9 angeordnet.

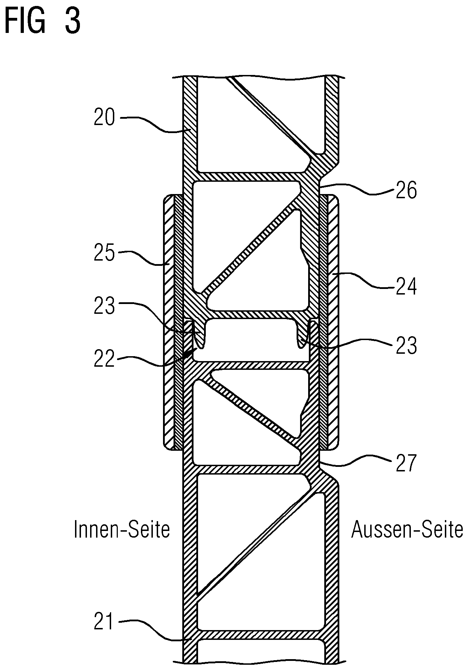

Figur 3 veranschaulicht eine alterative Ausführungsform für einen Fügebereich zwischen zwei Hohlkammerprofilen 20, 21. Bei dieser Ausführungsform ist eine Einfädeleinrichtung vorgesehen, die als Schiebesitz 22 ausgeführt ist. Dazu weist das Hohlkammerprofil 20 in Richtung auf das Hohlkammerprofil 21 vorstehende Stege 23 auf, die beim Zusammenführen der Hohlkammerprofile 20, 21 in das Hohlkammerprofil 21 eingreifen und somit für eine Vorpositionierung der Hohlkammerprofile 20, 21 für einen nachfolgenden Klebevorgang dienen.

Auf einer Außenseite des Wagenkasten-Rohbaus 7 kommt erneut ein Blech- oder Profilstreifen 24 zum Einsatz, der mit überlappenden Abschnitten der Hohlkammerprofile 20, 21 strukturell verklebt ist. Auf der Innenseite des Wagenkasten-Rohbaus 7 ist ein weiterer Blech- oder Profilstreifen 25 vorgesehen, der wiederum mit überlappenden Abschnitten der Hohlkammerprofile 20, 21 strukturell verklebt ist.

Wie im ersten Ausführungsbeispiel für einen Fügebereich zwischen zwei Hohlkammerprofilen nach Figur 2 weisen die Hohlkammerprofile 20, 21 auf einer Außenseite des Wagenkasten-Rohbaus 7 Absätze 26, 27 auf, so dass eine bündige Außenhaut des Wagenkasten-Rohbaus erhalten werden kann.

Das anhand von Figur 1 dargestellte Verfahren zur modularen Herstellung eines Wagenkasten-Rohbaus ist anwendbar für sämtliche Großbaugruppen des Wagenkasten-Rohbaus 7, die aus der Gruppe ausgewählt sind, die ein Untergestell, eine Seitenwand, ein Dach, eine Stirnwand und einen Kopf des Wagenkasten-Rohbaus umfasst. Die Gestaltung der Fügebereiche nach den alternativen Ausführungsformen der Figuren 2 und 3 geht davon aus, dass die miteinander per strukturellem Kleben zu fügenden Großbaugruppen in Integralbauweise gefertigt sind. Eine Übertragung der Klebevorgänge auf Großbaugruppen, die in Differentialbauweise hergestellt sind, ist ohne Weiteres insoweit möglich, dass die betreffenden, in den Fügevorgang einbezogenen Konturen der Hohlkammerprofile 8, 9 bzw. 20, 21 in Differentialbauweise übernommen werden. Sollte eine der an dem Fügevorgang betroffenen Großbaugruppen aus faserverstärktem Kunststoff bestehen, so müsste eine an dem Fügevorgang beteiligte äußere Kontur einer solchen Großbaugruppe ebenfalls der entsprechenden Kontur eines der vorstehend näher beschriebenen Hohlkammerprofile 8, 9, 20, 21 besitzen.

## Patentansprüche

1. Verfahren zur modularen Herstellung eines Wagenkasten-Rohbaus (7) eines Schienenfahrzeugs mit den aufeinanderfolgenden Schritten:
a) paralleles Fertigen von wenigstens zwei unmittelbar aneinander angrenzenden Großbaugruppen (4, 5, 6) des Wagenkasten-Rohbaus (7), die aus der Gruppe ausgewählt sind, die ein Untergestell, eine Seitenwand, ein Dach, eine Stirnwand und einen Kopf des Wagenkastens umfasst, wobei sämtliche Großbaugruppen (4, 5, 6) des Wagenkasten-Rohbaus (7) parallel zueinander gefertigt werden
b) Fügen der wenigstens zwei parallel zueinander gefertigten Großbaugruppen (4, 5, 6) aus Schritt a) mittels strukturellem Kleben, wobei sämtliche Großbaugruppen (4, 5, 6) des Wagenkasten-Rohbaus (7) mittels strukturellem Kleben untereinander gefügt werden.

2. Verfahren nach Anspruch 1,
bei dem
einander zugewandte Randabschnitte (12, 13) von miteinander zu fügenden Großbaugruppen (4, 5, 6) aus Hohlkammerprofilen (8, 9, 20, 21) gebildet werden, wobei die einander zugewandten Seiten der Hohlkammerprofile (8, 9, 20, 21) eine Einfädeleinrichtung zum Vorpositionieren der Hohlkammerprofile (8, 9, 20, 21) zueinander aufweisen und einer Außenseite des Wagenkasten-Rohbaus (7) zugeordnete Seiten der Hohlkammerprofile (8, 9, 20, 21) mittels eines mit den Hohlkammerprofilen (8, 9, 20, 21) jeweils überlappenden Blech- oder Profilstreifens (11, 24)verbunden werden, dessen den Hohlkammerprofilen (8, 9, 20, 21) zugewandte Randabschnitte (12, 13) jeweils mit den Hohlkammerprofilen (8, 9, 20, 21) strukturell verklebt werden.

3. Verfahren nach Anspruch 2,
bei dem
die einander zugewandten Randabschnitte (12, 13) der Hohlkammerprofile (8, 9, 20, 21) jeweils an ihren einer Außenseite des Wagenkasten-Rohbaus (7) zugeordneten Seiten einen Absatz (16, 17, 26, 27) aufweisen, in dessen Bereich der Blech- oder Profilstreifen (11, 24, 25) strukturell mit dem jeweiligen Hohlkammerprofil (8, 9, 20, 21) verklebt wird, wobei die Höhe des Absatzes (16, 17, 26, 27) der Höhenerstreckung des Blech- oder Profilstreifens (11, 24) und der strukturellen Klebeschicht (14, 15,19) entspricht.

4. Verfahren nach einem der Ansprüche 2 oder 3,
bei dem
die Einfädeleinrichtung von einer Nut-/Federeinrichtung (10) gebildet wird, die auf einer einer Innenseite des Wagenkasten-Rohbaus (7) zugeordneten Seite der Hohlkammerprofile (8, 9) angeordnet ist.

5. Verfahren nach Anspruch 4,
bei dem
in Schritt b) ein Zwischenprofil (18) zwischen die Einfädeleinrichtung und den Blech- oder Profilstreifen (11) gelegt wird und dieses Zwischenprofil (18) auf der einer Innenseite des Wagenkasten-Rohbaus (7) zugeordneten Seite der Hohlkammerprofile (8, 9) jeweils mit den Hohlkammerprofilen (8, 9) strukturell verklebt wird sowie auf der einer Außenseite des Wagenkasten-Rohbaus (7) zugeordneten Seite der Hohlkammerprofile (8, 9) mit dem Blech- oder Profilstreifen (11) strukturell verklebt wird.

6. Verfahren nach einem der Ansprüche 2 oder 3,
bei dem
die Einfädeleinrichtung von einem Schiebesitz (22) gebildet wird, wobei das eine Hohlkammerprofil (20) in Richtung auf das andere Hohlkammerprofil (21) vorstehende Stege (23) aufweist, die beim Zusammenführen der Hohlkammerprofile (20, 21) in das andere Hohlkammerprofil (21) eingreifen.

7. Verfahren nach Anspruch 6,
bei dem
die einander zugewandten Randabschnitte (12, 13) der Hohlkammerprofile (8, 9, 20, 21) jeweils an ihren einer Innenseite des Wagenkasten-Rohbaus (7) zugeordneten Seite jeweils mit einem weiteren Blech- oder Profilstreifen (25) strukturell verklebt werden.

8. Wagenkasten eines Schienenfahrzeugs, der aus unmittelbar aneinander angrenzenden Großbaugruppen (4, 5, 6) aufgebaut ist, die aus der Gruppe ausgewählt sind, die ein Untergestell, zwei Seitenwände, ein Dach, zwei Stirnwände oder eine Stirnwand und einen Kopf des Wagenkasten-Rohbaus (7) umfassen,
**dadurch gekennzeichnet, dass**
Einander zugewandte Randabschnitte (12, 13) von zwei unmittelbar miteinander zu fügenden Großbaugruppen (4, 5, 6) aus Hohlkammerprofilen (8, 9, 20, 21) gebildet sind, wobei die einander zugewandten Seiten der Hohlkammerprofile (8, 9, 20, 21) eine Einfädelhilfe zum Vorpositionieren der Hohlkammerprofile (8, 9, 20, 21) zueinander aufweisen und eine Außenseite des Wagenkasten-Rohbaus (7) zugeordnete Seiten der Hohlkammerprofile (8, 9, 20, 21) mittels eines mit den Hohlkammerprofilen (8, 9, 20, 21) jeweils überlappenden Blech- oder Profilstreifens (11, 24, 25) verbunden sind, dessen den Hohlkammerprofilen (8, 9, 20, 21) zugewandte Randabschnitte (12, 13) jeweils mit den Hohlkammerprofilen (8, 9, 20, 21) strukturell verklebt sind, wobei sämtliche Großbaugruppen (4, 5, 6) des Wagenkasten-Rohbaus (7) mittels strukturellem Kleben untereinander gefügt sind.

9. Wagenkasten-Rohbau (7) nach Anspruch 8,
**dadurch gekennzeichnet, dass**
die einander zugewandten Randabschnitte (12, 13) der Hohlkammerprofile (8, 9, 20, 21) jeweils an ihren einer Außenseite des Wagenkasten-Rohbaus (7) zugeordneten Seiten einen Absatz (16, 17, 26, 27) aufweisen, in dessen Bereich der Blech- oder Profilstreifen (11, 24, 25) strukturell mit dem jeweiligen Hohlkammerprofil (8, 9, 20, 21) verklebt ist, wobei die Höhe des Absatzes (16, 17, 26, 27) der Höhenerstreckung des Blech- oder Profilstreifens (11, 24) und der strukturellen Klebeschicht (14, 15,19) entspricht.

10. Wagenkasten-Rohbau (7) nach einem der Ansprüche 8 oder 9, bei dem
die Einfädelhilfe als Nut-Federeinrichtung ausgebildet ist, die auf einer einer Innenseite des Wagenkasten-Rohbaus (7) zugeordneten Seite der Hohlkörperprofile (8, 9)angeordnet ist.

11. Wagenkasten-Rohbau (7) nach Anspruch 10,
**dadurch gekennzeichnet, dass**
ein Zwischenprofil (18) zwischen die Einfädeleinrichtung und den Blech- oder Profilstreifen (11) gelegt ist und dieses Zwischenprofil (18) auf der an einer Innenseite des Wagenkasten-Rohbaus (7) zugeordneten Seite der Hohlkammerprofile (8, 9) jeweils mit den Hohlkammerprofilen (8, 9) strukturell verklebt ist sowie auf der einer Außenseite des Wagenkasten-Rohbaus (7) zugeordneten Seite der Hohlkammerprofile (8, 9) mit dem Blech- oder Profilstreifen (11) strukturell verklebt ist.

12. Wagenkasten-Rohbau (7) nach Anspruch 11,
**dadurch gekennzeichnet, dass**
das Zwischenprofil (18) rechteck- oder trapezförmig ausgebildet ist.

13. Wagenkasten-Rohbau (7) nach einem der Ansprüche 8 oder 9, **dadurch gekennzeichnet, dass**
die Einfädeleinrichtung von einem Schiebesitz (22) gebildet ist, wobei das eine Hohlklammerprofil (20) in Richtung auf das andere Hohlklammerprofil (21) vorstehende Stege (23) aufweist, die beim Zusammenführen der Hohlklammerprofile (20, 21) in das andere Hohlklammerprofil (21) eingreifen.

14. Wagenkasten-Rohbau (7) nach Anspruch 13,
**dadurch gekennzeichnet, dass**
die einander zugewandten Randabschnitte (12, 13) der Hohlklammerprofile jeweils an ihrer einer Innenseite des Wagenkasten-Rohbaus (7) zugeordneten Seite mit einem weiteren Blech- oder Profilstreifen (25) strukturell verklebt sind.

## Claims

1. Method for the modular manufacturing of a carbody shell (7) of a rail vehicle with the consecutive steps:
a) parallel production of at least two directly adjoining major assemblies (4, 5, 6) of the carbody shell (7), which are selected from the group comprising a chassis, a side wall, a roof, a front wall and a head of the carbody, wherein all major assemblies (4, 5, 6) of the carbody shell (7) are produced in parallel with one another
b) joining the at least two major assemblies (4, 5, 6) produced in parallel with one another from step a) by means of a structural adhesive, wherein all major assemblies (4, 5, 6) of the carbody shell (7) are joined to one another by means of structural adhesive.

2. Method according to claim 1,
in which
edge sections (12, 13), facing one another, of major assemblies (4, 5, 6) to be joined to one another are formed from hollow chamber profiles (8, 9, 20, 21), wherein the sides of the hollow chamber profiles (8, 9, 20, 21) facing one another have a threading facility for prepositioning the hollow chamber profiles (8, 9, 20, 21) with respect to one another and sides of the hollow chamber profile (8, 9, 20, 21) assigned to an exterior of the carbody shell (7) are connected by means of a sheet metal or profile strip (11, 24) which overlaps with the hollow chamber profiles (8, 9, 20, 21) in each case, the edge sections (12, 13) of which facing the hollow chamber profiles (8, 9, 20, 21) are each adhered structurally to the hollow chamber profiles (8, 9, 20, 21).

3. Method according to claim 2,
in which
the edge sections (12, 13), facing one another, of the hollow chamber profiles (8, 9, 20, 21) have a projection (16, 17, 26, 27) on their sides assigned to an exterior of the carbody shell (7), in the region of which the sheet metal or profile strips (11, 24, 25) is adhered structurally to the respective hollow chamber profile (8, 9, 20, 21), wherein the height of the projection (16, 17, 26, 27) corresponds to the height extent of the sheet metal or profile strip (11, 24) and the structural adhesive layer (14, 15, 19).

4. Method according to one of claims 2 or 3,
in which
the threading facility is formed by a tongue and groove facility (10) which is arranged on a side of the hollow chamber profile (8, 9) assigned to an interior of the carbody shell (7).

5. Method according to claim 4,
in which
in step b), an intermediate profile (18) is placed between the threading facility and the sheet metal or profile strip (11) and this intermediate profile (18) is adhered structurally to the hollow chamber profiles (8, 9) on the side of the hollow chamber profiles (8, 9)assigned to an interior of the carbody shell (7) in each case and is also adhered structurally to the sheet metal or profile strip (11) on the side of the hollow chamber profiles (8, 9) assigned to an exterior of the carbody shell (7).

6. Method according to one of claims 2 or 3,
in which
the threading facility is formed by a sliding seat (22), wherein the one hollow chamber profile (20) has webs (23) protruding in the direction of the other hollow chamber profile (21), which engage in the other hollow chamber profile (21) when the hollow chamber profiles (20, 21) are merged.

7. Method according to claim 6,
in which
the edge sections (12, 13), facing one another, of the hollow chamber profiles (8, 9, 20, 21) are adhered structurally to a further sheet metal or profile strip (25) on their sides assigned to an interior of the carbody shell (7).

8. Carbody of a rail vehicle, which is assembled from directly adjoining major assemblies (4, 5, 6), which are selected from the group comprising a chassis, two side walls, a roof, two front walls or a front wall and a head of the carbody shell (7),
**characterised in that**
edge sections (12, 13), facing one another, of two major assemblies (4, 5, 6) to be directly joined to one another are formed from hollow chamber profiles (8, 9, 20, 21), wherein the sides of the hollow chamber profiles (8, 9, 20, 21) facing one another have a threading aid for prepositioning the hollow chamber profiles (8, 9, 20, 21) with respect to one another and sides of the hollow chamber profiles (8, 9, 20, 21), assigned to an exterior of the carbody shell (7) are connected by means of a sheet metal or profile strip (11, 24, 25) overlapping with the hollow chamber profiles (8, 9, 20, 21) in each instance, the edge sections (12, 13) of which facing the hollow chamber profiles (8, 9, 20, 21) are each adhered structurally to the hollow chamber profiles (8, 9, 20, 21), wherein all major assemblies (4, 5, 6) of the carbody shell (7) are joined to one another by means of structural adhesion.

9. Carbody shell (7) according to claim 8,
**characterised in that**
the edge sections (12, 13), facing one another, of the hollow chamber profiles (8, 9, 20, 21) each have a projection (16, 17, 26, 27) on their sides assigned to an exterior of the carbody shell (7), in the region of which the sheet metal or profile strips (11, 24, 25) is adhered structurally to the respective hollow chamber profile (8, 9, 20, 21), wherein the height of the projection (16, 17, 26, 27) corresponds to the height extent of the sheet metal or profile strip (11, 24) and the structural adhesive layer (14, 15, 19).

10. Carbody shell (7) according to one of claims 8 or 9,
in which
the threading aid is embodied as a tongue and groove facility, which is arranged on a side of the hollow body profile (8, 9) assigned to an interior of the carbody shell (7).

11. Carbody shell (7) according to claim 10,
**characterised in that**
an intermediate profile (18) is placed between the threading facility and the sheet metal or profile strip (11), and this intermediate profile (18) is adhered structurally to the hollow chamber profiles (8, 9) on the side of the hollow chamber profiles (8, 9) assigned to an interior of the carbody shell (7) and is adhered structurally to the sheet metal or profile strip (11) on the side of the hollow chamber profile (8, 9) assigned to an exterior of the carbody shell (7).

12. Carbody shell (7) according to claim 11,
**characterised in that**
the intermediate profile (18) is embodied with a rectangular or trapezoid shape.

13. Carbody shell (7) according to one of claims 8 or 9,
**characterised in that**
the threading facility is formed by a sliding seat (22), wherein the one hollow chamber profile (20) has webs (23) protruding in the direction of the other hollow chamber profile (21), which engage in the other hollow chamber profile (21) when the hollow chamber profiles (20, 21) are merged.

14. Carbody shell (7) according to claim 13,
**characterised in that**
the edge sections (12, 13), facing one another, of the hollow chamber profiles are adhered structurally to a further sheet metal or profile strip (25) assigned to an interior of the carbody shell (7).

## Revendications

1. Procédé de fabrication modulaire d'une carrosserie (7) brute d'un véhicule ferroviaire comportant les stades successifs :
a) on fabrique en parallèle au moins deux grands modules (4, 5, 6) de la carrosserie (7) brute voisins l'un de l'autre et qui sont sélectionnés dans le groupe, qui comprend un châssis, une paroi latérale, un toit, une paroi frontale et un about de la caisse, tous les grands modules (4, 5, 6) de la carrosserie (7) brute étant fabriqués en parallèle les uns aux autres
b) on assemble les au moins deux modules (4, 5, 6) résultant du stade a), fabriqués en parallèle l'un à l'autre au moyen d'un collage structurel, tous les grands modules (4, 5, 6) de la carrosserie (7) brute étant assemblés les uns aux autres au moyen d'un collage structurel.

2. Procédé suivant la revendication 1,
dans lequel
on forme des parties (12, 13) de bord tournées l'une vers l'autre de grands modules (4, 5, 6) à assembler l'un à l'autre à partir des profilés (8, 9, 20, 21) à compartiment creux, les côtés tournés l'un vers l'autre des profilés (8, 9, 20, 21) à compartiment creux comportant un dispositif d'enfilage pour le prépositionnement des profilés (8, 9, 20, 21) à compartiment creux l'un par rapport à l'autre et des côtés du profilé (8, 9, 20, 21) à compartiment creux associés à un côté extérieur de la carrosserie (7) brute étant reliés au moyen d'une bande (11, 24) de tôle ou de profilé, qui recouvre respectivement les profilés (8, 9, 20, 21) à compartiment creux et dont les parties (12, 13) de bord tournées vers les profilés (8, 9, 20, 21) à compartiment creux sont collés structurellement respectivement aux profilés (8, 9, 20, 21) à compartiment creux.

3. Procédé suivant la revendication 2,
dans lequel
les parties (12, 13) de bord tournées l'une vers l'autre des profilés (8, 9, 20, 21) à compartiment creux comportent respectivement, sur leurs côtés associés à un côté extérieur de la carrosserie (7) brute, un décrochement (16, 17, 26, 27), dans la région duquel on colle la bande (11, 24, 25) de tôle ou de profilé structurellement aux profilés (8, 9, 20, 21) à compartiment creux associés, la hauteur du décrochement (16, 17, 26, 27) correspondant à l'étendue en hauteur de la bande (11, 24) de tôle ou de profilé et de la couche (14, 15, 19) de colle structurelle.

4. Procédé suivant l'une des revendications 2 ou 3,
dans lequel
le dispositif d'enfilage est formé par un dispositif (10) à tenon et mortaise, qui est disposé sur un côté des profilés (8, 9) à compartiment creux associé à un côté intérieur de la carrosserie (7) brute.

5. Procédé suivant la revendication 4,
dans lequel
on place au stade b) un profilé (18) intermédiaire entre le dispositif d'enfilage et la bande (11) de tôle ou de profilé et on colle ce profilé (18) intermédiaire structurellement respectivement aux profilés (8, 9) à compartiment creux du côté des profilés (8, 9) à compartiment creux associés à un côté intérieur de la carrosserie (7) brute et on le colle structurellement à la bande (11) de tôle ou de profilé sur le côté du profilé (8, 9) à compartiment creux associé à un côté extérieur de la carrosserie (7) brute.

6. Procédé suivant l'une des revendications 2 ou 3,
dans lequel
le dispositif d'enfilage est formé par un siège (22) coulissant, le profilé (20) à compartiment creux comportant des barrettes (23) faisant saillie dans la direction de l'autre profilé (21) à compartiment creux et entrant dans l'autre profilé (21) à compartiment creux lors de l'assemblage des profilés (20, 21) à compartiment creux.

7. Procédé suivant la revendication 6,
dans lequel
on colle structurellement respectivement à une bande (25) de tôle ou de profilé supplémentaire, les parties (12, 13) de bord, tournées vers l'une vers l'autre, des profilés (8, 9, 20, 21) à compartiment creux respectivement de leurs côtés associés à un côté intérieur de la carrosserie (7) brute.

8. Caisse d'un véhicule ferroviaire, qui est composé de grands modules (4, 5, 6) directement voisins l'un de l'autre, qui sont sélectionnés dans le groupe, qui comprend un châssis, deux parois latérales, un toit, deux parois frontales ou une paroi frontale et un about de la carrosserie (7) brute,
**caractérisée en ce que**
des parties (12, 13) de bord tournées l'une vers l'autre de deux grands modules (4, 5, 6) à assembler directement l'un à l'autre à partir de profilés (8, 9, 20, 21) à compartiment creux, les côtés tournés vers l'un l'autre des profilés (8, 9, 20, 21) à compartiment creux comportant une aide à l'enfilage pour le prépositionnement l'un par rapport à l'autre des profilés (8, 9, 20, 21) à compartiment creux et des côtés des profilés (8, 9, 20, 21) à compartiment creux associés à un côté extérieur de la carrosserie (7) brute étant reliés au moyen d'une bande (11, 24, 25) de tôle ou de profilé, qui recouvre respectivement les profilés (8, 9, 20, 21) à compartiment creux et dont les parties (12, 13) de bord tournées vers les profilés (8, 9, 20, 21) à compartiment creux sont collées structurellement respectivement aux profilés (8, 9, 20, 21) à compartiment creux, tous les grands modules (4, 5, 6) de la carrosserie (7) brute étant assemblés les uns aux autres au moyen d'un collage structurel.

9. Carrosserie (7) brute suivant la revendication 8,
**caractérisée en ce que**
les parties (12, 13) de bord tournées l'une vers l'autre des profilés (8, 9, 20, 21) à compartiment creux comportent respectivement sur leurs côtés associés à un côté extérieur de la carrosserie (7) brute, un décrochement (16, 17, 26, 27), dans la région duquel la bande (11, 24, 25) de tôle ou de profilé est collée structurellement aux profilés (8, 9, 20, 21) à compartiment creux associés, la hauteur du décrochement (16, 17, 26, 27) correspondant à l'étendue en hauteur de la bande (11, 24) de tôle ou de profilé et à la couche (14, 15, 19) structurelle.

10. Carrosserie (7) brute suivant l'une des revendications 8 ou 9,
dans laquelle
l'aide à l'enfilage est réalisée en dispositif à tenon et mortaise, qui est monté sur un côté des profilés (8, 9) à compartiment creux associé à un côté intérieur de la carrosserie (7) brute.

11. Carrosserie (7) brute suivant la revendication 10,
**caractérisée en ce qu'**
un profilé (18) intermédiaire est placé entre le dispositif d'enfilage et la bande (11) de tôle ou de profilé et ce profilé (18) intermédiaire est collé structurellement aux profilés (8, 9) à compartiment creux sur le côté des profilés (8, 9) à compartiment creux associé à un côté intérieur de la carrosserie (7) brute et il est collé structurellement à la bande (11) de tôle ou de profilé du côté du profilé (8, 9) à compartiment creux associé au côté extérieur de la carrosserie (7) brute.

12. Carrosserie (7) brute suivant la revendication 11,
**caractérisée en ce que**
le profilé (18) intermédiaire est réalisé de manière rectangulaire ou trapézoïdale.

13. Carrosserie (7) brute suivant l'une des revendications 8 ou 9,
**caractérisée en ce que**
le dispositif d'enfilage est formé par un siège (22) coulissant, l'un des profilés (20) à compartiment creux comportant des barrettes (23), qui font saillie dans la direction de l'autre profilé (21) à compartiment creux et qui entrent dans l'autre profilé (21) à compartiment creux lors de l'assemblage des profilés (20, 21) à compartiment creux.

14. Carrosserie (7) brute suivant la revendication 13,
**caractérisée en ce que**
les parties (12, 13) de bord tournées l'une vers l'autre des profilés à compartiment creux sont collées structurellement à une bande (25) de tôle ou de profilé supplémentaire de leurs côtés tournés vers un côté intérieur de la carrosserie (7) brute.
